# EUROPEAN PATENT APPLICATION

(11) **EP 1 609 374 A1**
(43) Date of publication of application: **28.12.2005**
(21) Application number: 04253633.4
(22) Date of filing: 17.06.2004
(51) Int. Cl.: A23L 1/22, A21D 2/18, A23L 1/317

(54) **Dry flowable flavouring ingredient based on soy cotyledon fibre, method for preparation thereof and food compositions comprising it**

(71) Applicant: Solae, LLC, St. Louis, Missouri 63102 (US)
(72) Inventor: Junge, Richard C., 60110 Carpentersville Illinois (US)
(74) Representative: Tubby, David George

(57) **Abstract**

A dry flowable flavouring ingredient composition is formed of a soy cotyledon fibre material and a flavour ingredient coated on the soy cotyledon fibre material.

## Description

The present invention relates to dry flavouring ingredients, in particular to a dry flowable flavouring ingredient formed of a soy cotyledon fibre material and a liquid flavour ingredient plated on the soy cotyledon fibre material, as well as a process for producing such a flavouring ingredient, and food materials containing the flavouring ingredient.

Dry flavouring ingredients are used in foods to provide the foods with improved taste and to extend the shelf-life of the foods. Common applications of dry flavouring ingredients in foods include use of such flavouring ingredients in baked goods, particularly breads; meats; snack bars; seasonings; chewing gums; and candies.

Dry flavouring ingredients may be formed by plating a liquid flavour ingredient onto a carrier, typically an edible powder. The liquid flavour ingredient is "plated" onto the carrier by spraying the liquid flavour onto the powder while mixing the combined powder and liquid flavour. The liquid flavour ingredient coats the exposed surfaces of the powder and adheres to those exposed surfaces. The liquid flavour ingredient is plated onto the powder until the powder reaches its saturation point. The saturation point is identified when the powder starts to lose its ability to flow freely, typically when the powder starts to clump.

Common powders used as carriers in dry flavouring ingredients include sucrose, cellulose, dextrose, maltodextrin, and carrot fibre. One drawback of these conventional powder flavour carriers is the limited amount of liquid flavour ingredient that may be absorbed by the powders. Typically these powders are capable of absorbing from 10% to 45% additional aqueous liquid flavour ingredient relative to the initial weight of the powder, and typically absorb less oil based or alcohol based liquid flavour ingredient. Due to the limited amount of liquid flavour ingredient the conventional powder flavour carriers can absorb, flavour loss is a problem with the conventional powder flavour carriers as the flavour coated on the surface of the powder carrier is exposed to and evaporated into the atmosphere.

We have now surprising found that the unique structure of soy cotyledon fibre allows it to carry far more flavouring material than can be carried by such conventional carrier materials.

Thus, in one aspect, the present invention is a flowable powdered flavour composition. The flowable powdered flavour composition contains a soy cotyledon fibre material and a flavour ingredient coated on the soy cotyledon fibre material. Preferably the soy cotyledon fibre material contains hollow soy polysaccharide fibres, where a hollow soy polysaccharide fibre has an interior surface and an exterior surface, where the flavour ingredient is coated on the interior surface and the exterior surface of the hollow soy polysaccharide fibres of the soy cotyledon material. Most preferably, the interior surface and the exterior surface of the hollow soy polysaccharide fibres are irregularly shaped.

In another aspect, the present invention is a method of producing a flowable powdered flavour composition in which a soy cotyledon fibre material is coated with a liquid flavour ingredient. Preferably, the soy cotyledon fibre material contains hollow soy polysaccharide fibres, where a hollow soy polysaccharide fibre has an interior surface and an exterior surface, and the liquid flavour ingredient is coated on the interior surface and the exterior surface of the hollow soy polysaccharide fibres of the soy cotyledon fibre material.

In a further aspect, the present invention is a flavoured food. The flavoured food contains a food material and a powdered flavour composition. The powdered flavour composition contains a soy cotyledon fibre material and a flavour ingredient that is coated on the soy cotyledon fibre material.

The present invention relates to the use of a soy cotyledon fibre material as a dry powdered flavour carrier. Soy cotyledon fibre materials surprisingly can be coated with large quantities of liquid flavour ingredients while maintaining flowability. The quantity of liquid flavour ingredients that can be coated on a soy cotyledon fibre material can exceed four times the amount of liquid flavour ingredients that can be coated on conventional dry powdered flavour carriers. The liquid flavour coated soy cotyledon fibre material, therefore, can provide more flavour than conventional dry powdered flavour ingredients, and can provide longer flavour shelf-life in foods due to the quantity of flavour coated in and on the soy cotyledon fibre material.

Applicants' assignees copending, concurrently filed herewith provisional application having Attorney Docket number CL2149 discloses subject matter related to the present application, and is specifically incorporated herein by reference.

A "flowable" powdered material, as used herein, is defined as a particulate material which is capable of passing through a #16 sieve (14 U.S. mesh) in an amount of at least 95%, by weight, upon shaking for 2.5 minutes. The flowability of a material may be measured by placing 100 grams of the material onto a #16 sieve, shaking the sieve for 2.5 minutes on a sieve shaker, measuring the weight of the material remaining on the sieve after shaking for 2.5 minutes, and calculating the percent of the material that flowed through the sieve according to the formula: 100 * [1 - ((Weight of material remaining on sieve)/100)].

"Soy cotyledon fibre material", as used herein, is defined as the fraction of dehulled, defatted, and degermed soybeans that is insoluble in an aqueous solution having a pH substantially above or below the isoelectric point of the combined 7S and 11S fractions of soy protein (typically a pH of 6.0 or greater, or 3.0 or less, where the isoelectric point of the 7S fraction of soy protein is 4.5 and the isoelectric point of the 11S fraction of soy protein is 5.3). Soy cotyledon fibre material, as used herein, includes pure soy polysaccharide fibre―both soluble and insoluble fibre fractions―but also includes compositions containing soy polysaccharide fibre in combination with soy protein and other minor constituents such as ash and fat. For example, Fibrim 1450, a commercially available soy cotyledon fibre material available from Solae LLC., contains by weight: 80.6% dietary fibre (as is); 12.2% protein (N x 6.25%, as is); 3.6% ash, 0.9% fat (acid hydrolysis); and other minor constituents. "Soy cotyledon fibre material", as used herein, does not include soy hull fibre.

Soy cotyledon fibre materials useful in the present invention may be produced from commercially available soy flour, soy grits, soy meal, or soy flakes. The soy flour, soy grits, soy meal, or soy flakes is/are extracted with an aqueous solution having a pH substantially above or below the isoelectric point of soy protein (pH 4.5) to extract protein and water soluble carbohydrates from the cotyledon fibre. Preferably the aqueous extractant has a pH of above pH 6.0 or below pH 3.0. Most preferably the aqueous extractant is an aqueous alkaline solution having a pH of from 8.0 to 10.0, preferably an aqueous sodium hydroxide solution. Alternatively the preferred aqueous extractant is an acidic solution having a pH of from 1.0 to 3.0, preferably a hydrochloric acid solution.

After extracting the protein and water soluble carbohydrates from the cotyledon fibre material, the liquid extract containing the protein and carbohydrates is separated from the fibre material. The extract may be separated from the fibre material in accordance with conventional separation techniques such as centrifugation and filtration.

The separated soy cotyledon fibre material is then dried to prepare a flowable powder. The fibre may be dried according to conventional drying techniques. However, the selection of the drying method affects the degree of liquid flavour ingredient that may be coated onto the soy cotyledon fibre. Spray drying is the most effective method and most preferred method of drying the soy cotyledon fibre material. Fluid bed drying is somewhat less effective, and tunnel drying is least effective. However, all methods of drying are effective to provide a soy cotyledon fibre material that is useful as the flowable powder flavour carrier of the present invention. After the soy cotyledon fibre material is dried, it may be ground to a powder, if necessary, according to conventional grinding methods.

Soy cotyledon fibre materials that are useful in the present invention are available commercially. For example, FIBRIM® 1260 and FIBRIM® 1450, available from Solae LLC, St. Louis, Missouri, USA, are soy cotyledon fibre materials that are useful in the present invention.

Liquid flavour ingredients that may be used in the composition and method of the present invention include common commercially available liquid flavour ingredients. Particularly preferred liquid flavour ingredients are aqueous, oil, and alcohol based liquid flavours. These liquid flavour ingredients include essential oils― which include but are not limited to lemon oil, jasmine, sage oil, cassia, clove bud, and orange essence oil; oleoresins incorporated in a liquid solvent; water or alcohol extracts and distillates of plants; fruit juice concentrates and fruit juice essences; naturally prepared esters; essential oil isolates and recombinations; and other commonly used flavour ingredients. In a preferred embodiment of the invention the liquid flavour ingredient is aqueous or alcohol based since the soy cotyledon fibre material is particularly effective as a flowable powdered flavour carrier for these liquid flavour ingredients. A particularly preferred alcohol base for delivering flavours in a liquid flavour ingredient is propylene glycol.

The composition of the present invention is a flowable powdered flavour formed of a soy cotyledon fibre material with a flavour ingredient coated on the soy cotyledon fibre material. The flavour ingredient may be coated on the soy cotyledon fibre by plating the flavour ingredient on the soy cotyledon fibre material or co-drying the flavour ingredient with the fibre material. "Plating", as used herein, is defined as applying a liquid flavour onto a flavour carrier powder, most preferably by spraying or atomising the liquid flavour, while mixing the carrier powder and the applied liquid flavour. A liquid flavour that is "plated" onto a flavour carrier powder is adsorbed onto the exposed surfaces of the flavour carrier powder and coats the exposed surfaces. Therefore, the soy cotyledon fibre material plated with the flavour ingredient is coated with the flavour ingredient on the exposed surfaces of the soy cotyledon fibre material.

Preferably, the soy cotyledon fibre material contains hollow soy polysaccharide fibres on which the flavour ingredient is plated. The hollow soy polysaccharide fibres each have an interior surface and an exterior surface, and the flavour ingredient is plated on both the interior surface and the exterior surface of the hollow fibres. Although the invention is not so intended to be bound, we believe that the effectiveness of the soy cotyledon fibre material as a flowable powdered flavour carrier is due to the hollow nature of the soy polysaccharide fibres. The interior surface of the hollow fibres provides surface area in addition to the surface area provided by the exterior surface on which the flavour ingredient may be plated, where conventional powdered flavour carriers provide only an exterior surface on which a flavour ingredient may be plated. More flavour ingredient, therefore, can be plated on the soy cotyledon fibre material than on conventional powdered flavour carriers, so the soy cotyledon fibre material/flavour ingredient composition can provide more flavour than conventional dry powdered flavour ingredients and can provide longer flavour shelf-life in foods containing the composition of the invention.

Most preferably, the interior and exterior surfaces of the hollow soy polysaccharide fibres of the soy cotyledon material on which the flavour ingredient is plated are irregularly shaped. The irregularly shaped interior and exterior surfaces of the hollow soy polysaccharide fibres increase the surface area of the interior and exterior surfaces relative to regularly shaped or smooth surfaces so that more flavour ingredient is plated on the irregularly shaped surfaces than would be plated on regularly shaped or smooth surfaces.

The soy cotyledon fibre material/flavour ingredient composition is prepared by 1) plating a liquid flavour ingredient onto a soy cotyledon fibre material; or 2) co-drying a liquid flavour ingredient with a soy cotyledon fibre material, preferably by co-spray drying the flavour and the fibre material. The liquid flavour ingredient may be plated on the soy cotyledon fibre by adding the liquid flavour ingredient to the powdered soy cotyledon fibre material and mixing the combined ingredients. There are numerous conventional methods for mixing a solid with a liquid that may be used to plate the liquid flavour ingredient on the soy cotyledon fibre. Preferably the liquid flavour ingredient is plated on the soy cotyledon fibre material by spraying the liquid flavour ingredient on the soy cotyledon fibre material, where most preferably the spray is an atomised spray.

One method of spraying the liquid flavour ingredient on the soy cotyledon fibre material is to place the soy cotyledon fibre material in a tumbler and to atomise the liquid flavour ingredient into the tumbler containing the soy cotyledon fibre material while the tumbler mixes the ingredients. Another method of spraying the liquid flavour on the soy cotyledon fibre material is to drop the soy cotyledon fibre through an aerosol or atomised mist of the liquid flavour ingredient a sufficient number of times to saturate the soy cotyledon fibre with the liquid flavour ingredient.

Alternatively, the soy cotyledon fibre material may be coated with the liquid flavour ingredient by adding the fibre material to the liquid flavour ingredient. In order to add the soy cotyledon fibre material to the liquid flavour ingredient, the liquid flavour ingredient is placed in a mixing bowl or other container capable of holding the liquid flavour ingredient and mixing the added cotyledon fibre material with the liquid flavour ingredient. The soy cotyledon fibre material is added to the liquid flavour ingredient and the combined fibre material and flavour ingredient are vigorously mixed. The soy cotyledon fibre material is added to the liquid flavour ingredient until sufficient soy cotyledon fibre material has been added to create a flowable powder.

The liquid flavour ingredient may be co-dried with the soy cotyledon fibre material by any drying process that rapidly intermingles the flavour and the fibre material while simultaneously drying them. The most preferred method of co-drying the flavour ingredient and the fibre material is spray drying the flavour and the fibre material together. In order to spray dry the fibre material, an aqueous slurry of the soy cotyledon fibre material is formed having from 5% to 13% solids, by weight. The fibre material slurry and the liquid flavour ingredient may then be co-spray dried using a commercially available spray dryer in a conventional manner. The spray drying is preferably carried out at relatively low temperatures to prevent volatilisation and temperature induced modification of the flavour ingredient.

The flavour ingredient is plated onto, or co-dried with, the soy cotyledon fibre material in an amount effective to maximize the flavour ingredient coated on the soy cotyledon fibre while maintaining the flowability of the combined flavour ingredient and soy cotyledon fibre. The amount of the liquid flavour ingredient that the soy cotyledon fibre can adsorb while maintaining its flowability depends on the nature of the liquid. The soy cotyledon fibre material is most effective adsorbing aqueous based liquid flavour ingredients, and can adsorb up to 2.5 times its weight of an aqueous based liquid flavour ingredient to form a soy cotyledon fibre material/liquid flavour ingredient composition containing, by weight, up to 75% liquid flavour ingredient. The soy cotyledon fibre material is less effective adsorbing oil based and alcohol based liquid flavour ingredients, but still is significantly more effective at adsorbing these types of liquid flavour ingredients than conventional powdered flavour carriers. The soy cotyledon fibre material can adsorb up to 0.5 times its weight of an oil or alcohol based liquid flavour ingredient to form a soy cotyledon fibre ingredient/liquid flavour ingredient composition containing, by weight, up to 33% liquid flavour ingredient.

The flowable powdered flavour composition formed by the soy cotyledon fibre ingredient and liquid flavour ingredient is useful for creating a flavoured food material having improved flavour and longer shelf-life (relative to flavoured food materials formed with conventional powdered flavour ingredients). A flavoured food material may be formed by dispersing the soy cotyledon fibre material/liquid flavour ingredient powdered flavour composition in a food material in a conventional manner for dispersing powdered flavour ingredients in food materials.

Baked breads are particularly preferred flavoured food materials in which the powdered flavour composition may be used. The powdered flavour composition of the present invention is particularly useful for extending the flavour shelf-life of such breads. To form a baked bread containing a powdered food flavour composition of the present invention, a powdered food flavour composition for flavouring bread is formed by plating molasses onto a soy cotyledon fibre material, in accordance with the method described above. The molasses flavoured powdered food composition is then added to a bread dough in an amount effective to provide flavour to the bread, typically from 0.1% to 5% by weight, and the bread dough is kneaded to disperse the molasses flavoured powdered food composition throughout the dough. The dough is then baked to produce the desired bread.

Emulsified meats are another flavoured food material in which the powdered food flavour composition may be used. To form an emulsified meat containing the powdered food flavour composition of the present invention, a powdered food flavour composition for flavouring emulsified meats is formed by plating a liquid flavour ingredient having spice flavours and meat notes onto a soy cotyledon fibre material in accordance with the method described above. The powdered meat flavour composition is then thoroughly mixed with emulsified meats such as deboned chicken, pork, and/or beef in a meat bowl chopper or a similar mixer. The mixed powdered meat flavour composition and emulsified meat may then be stuffed into casings and cooked to form a meat product.

The present invention is illustrated in more detail by the following non-limiting examples.

### EXAMPLE 1

The effectiveness of soy cotyledon fibre material as a powdered flavour carrier for an aqueous based flavour ingredient is examined relative to conventional powdered flavour carriers cellulose, maltodextrin, dextrose, and carrot fibre, and also relative to soy hull fibre cellulose.

200 grams of powdered soy cotyledon fibre material (FIBRIM® 1260 from Solae LLC) is placed into a 10.5 inch deep tumbler with a 7 inch round opening and having three 1 inch flights. The front of the tumbler is covered with SARAN® wrap, and a small hole is made in the centre of the SARAN® wrap to accept an atomizer nozzle. Water is placed in the aerosol reservoir of a DeVilbiss Atomizer 152, and the weight of the water and the reservoir is measured on a Mettler PM460 balance. The measured weight is recorded, and the nozzle of the atomizer is inserted into the tumbler through the hole in the SARAN® wrap. The tumbler is adjusted to a speed of 52 rpm, and the water is sprayed onto the soy cotyledon fibre material in the tumbler until the mixture of soy cotyledon fibre material and water does not appear to have free flowing properties. The total amount of water applied is recorded, and 100 grams of the mixed material is tested to determine its flowability in accordance with the "flowability" test described above. The same steps are repeated to determine the amount of water that can be added to cellulose, maltodextrin, dextrose, carrot fibre, and soybean hull fibre cellulose while maintaining flowability by replacing the soy cotyledon fibre material with AVICEL™ cellulose, maltodextrin, dextrose, carrot fibre, and soybean hull fibre cellulose, respectively. The results showing the amount of water added, the percentage water weight of the vacuum oven dried materials, and the effect of the added water on the flowability of these materials are shown in Table 1.

**TABLE 1**

| **Sample (200g)** | **Water applied (g)** | **% Water (total** m**ixture - vacuum oven-dried)** | **Flowability (% through sieve)** |
|---|---|---|---|
| Soy Cotyledon Fibre | 417.7 | 66.6 | 96.7 |
| Cellulose (Avicel) | 88.7 | 29.4 | 11.2 |
| Maltodextrin | 24.0 | 13.4 | 78.1 |
| Dextrose | 12.2 | 12.7 | 7.4 |
| Carrot Fibre | 174.1 | 49 | 20.4 |
| Soy Hull Fibre | 142.2 | 43.9 | 55.7 |

The results indicate that the soy cotyledon fibre material absorbs and holds a substantially greater amount of water than any of the other materials while maintaining its flowability. As such, the soy cotyledon fibre material is materially better than cellulose, maltodextrin, dextrose, carrot fibre, and soy hull fibre cellulose as a flowable powder flavour carrier for aqueous based flavour ingredients.

### EXAMPLE 2

The effectiveness of the soy cotyledon fibre material as a powdered flavour carrier for a propylene glycol (PG) based flavour ingredient is examined relative to conventional powdered flavour carriers cellulose, maltodextrin, and dextrose, and also relative to soy hull fibre cellulose.

200 grams of powdered soy cotyledon fibre material (FIBRIM® 1260 from Solae LLC) is placed into a 10.5 inch deep tumbler with a 7 inch round opening and having three 1 inch flights. The front of the tumbler is covered with SARAN® wrap, and a small hole is made in the centre of the SARAN® wrap to accept an atomizer nozzle. Propylene glycol is placed in the aerosol reservoir of a DeVilbiss Atomizer 152, and the weight of the propylene glycol and the reservoir is measured on a Mettler PM460 balance. The measured weight is recorded, and the nozzle of the atomizer is inserted into the tumbler through the hole in the SARAN® wrap. The tumbler is adjusted to a speed of 52 rpm, and the propylene glycol is sprayed onto the soy cotyledon fibre material in the tumbler until the mixture of soy cotyledon fibre material and propylene glycol does not appear to have free flowing properties. The total amount of propylene glycol applied is recorded, and 100 grams of the mixed material is tested to determine its flowability in accordance with the "flowability" test described above. The same steps are repeated to determine the amount of propylene glycol that can be added to cellulose, maltodextrin, dextrose, and soybean hull fibre cellulose while maintaining flowability by replacing the soy cotyledon fibre material with AVICEL™ cellulose, maltodextrin, dextrose, and soybean hull fibre cellulose, respectively. The results showing the amount of propylene glycol added, the percentage propylene glycol by weight of the materials, and the effect of propylene glycol on the flowability of these materials are shown in Table 2.

**TABLE 2**

| **Sample (200g)** | **PG applied (g)** | **% PG (total mixture)** | **Flowability (% through sieve)** |
|---|---|---|---|
| Soy Cotyledon Fibre | 83.2 | 29.3 | 91.4 |
| Cellulose (Avicel) | 63.8 | 24.1 | 97.1 |
| Maltodextrin | 18 | 8.2 | 25.8 |
| Dextrose | 19.7 | 8.9 | 34.5 |
| Soy Hull Fibre | 31.2 | 13.4 | 39.8 |

The results indicate that the soy cotyledon fibre material absorbs a substantially greater amount of propylene glycol than all of the other materials except cellulose while maintaining its flowability. As such, the soy cotyledon fibre material is materially better than maltodextrin, dextrose, and soy hull fibre cellulose as a flowable powder flavour carrier for propylene glycol based flavour ingredients. The soy cotyledon fibre material absorbed significantly more propylene glycol than cellulose while maintaining comparable flowability. As such, soy cotyledon fibre is comparable to, or better than, cellulose as a flowable powder flavour carrier for propylene glycol based flavour ingredients.

### EXAMPLE 3

The effectiveness of the soy cotyledon fibre material as a powdered flavour carrier for an oil based flavour ingredient is examined relative to conventional powdered flavour carriers cellulose, maltodextrin, and dextrose, and also relative to soy hull fibre cellulose.

200 grams of powdered soy cotyledon fibre material (FIBRIM® 1260 from Solae LLC) is placed into a 10.5 inch deep tumbler with a 7 inch round opening and having three 1 inch flights. The front of the tumbler is covered with SARAN® wrap, and a small hole is made in the centre of the SARAN® wrap to accept an atomizer nozzle. Liponate, a commonly used oil carrier for flavours, is placed in the aerosol reservoir of a DeVilbiss Atomizer 152, and the weight of the liponate and the reservoir is measured on a Mettler PM460 balance. The measured weight is recorded, and the nozzle of the atomizer is inserted into the tumbler through the hole in the SARAN® wrap. The tumbler is adjusted to a speed of 52 rpm, and the liponate is sprayed onto the soy cotyledon fibre material in the tumbler until the mixture of soy cotyledon fibre material and liponate does not appear to have free flowing properties. The total amount of liponate applied is recorded, and 100 grams of the mixed material is tested to determine its flowability in accordance with the "flowability" test described above. The same steps are repeated to determine the amount of liponate that can be added to cellulose, maltodextrin, dextrose, and soybean hull fibre cellulose while maintaining flowability by replacing the soy cotyledon fibre material with AVICEL™ cellulose, maltodextrin, dextrose, and soybean hull fibre cellulose, respectively. The results showing the amount of liponate added, the percentage liponate by weight of the materials, and the effect of the liponate on the flowability of these materials are shown in Table 3.

**TABLE 3**

| **Sample (200g)** | **oil applied (g)** | **% oil (total mixture)** | **Flowability (% through sieve)** |
|---|---|---|---|
| Soy Cotyledon Fibre | 92.7 | 31.6 | 80.0 |
| Cellulose (Avicel) | 23.2 | 10.3 | 27.9 |
| Maltodextrin | 18.6 | 8.5 | 26.4 |
| Dextrose | 17.8 | 8.1 | 37.6 |
| Soy Hull Fibre | 42.4 | 17.4 | 60.3 |

The results indicate that the soy cotyledon fibre material absorbs a substantially greater amount of oil than any of the other materials while maintaining its flowability. As such, the soy cotyledon fibre material is materially better than cellulose, maltodextrin, dextrose, carrot fibre, and soy hull fibre cellulose as a flowable powder flavour carrier for oil based flavour ingredients.

It will be appreciated by those skilled in the art that various changes may be made in the invention as disclosed without departing from the spirit of the invention. The invention is not to be the specifics of the disclosed embodiments, which are for the purpose of illustration, but rather is to be limited only by the scope of the appended claims and their equivalents.

## Claims

1. A flowable powdered flavour composition comprising: a soy cotyledon fibre material; and a flavour ingredient coated on said soy cotyledon fibre material.

2. A flavour composition according to Claim 1, wherein said soy cotyledon fibre material contains hollow soy polysaccharide fibres having an interior surface and an exterior surface, the flavour ingredient being coated on the interior and exterior surfaces of said hollow soy polysaccharide fibres of said soy cotyledon fibre material.

3. A flavour composition according to Claim 3, wherein the interior and exterior surfaces of said hollow soy polysaccharide fibres are irregularly shaped.

4. A method of producing a flowable powdered flavour composition comprising coating a soy cotyledon fibre material with a liquid flavour ingredient.

5. A method according to Claim 4, wherein said liquid flavour ingredient is plated on said soy cotyledon fibre material to coat said liquid flavour ingredient on said soy cotyledon fibre material.

6. A method according to Claim 5, wherein said soy cotyledon fibre material contains hollow soy polysaccharide fibres having an interior surface and an exterior surface, and wherein said liquid flavour ingredient is plated on the interior and exterior surfaces of said hollow soy polysaccharide fibres of said soy cotyledon fibre material.

7. A method according to Claim 6, wherein the hollow soy polysaccharide fibres have an irregular surface shape.

8. A method of according to any one of Claims 4 to 7, wherein said liquid flavour ingredient and said soy cotyledon fibre material are co-spray dried to coat said liquid flavour ingredient on said soy cotyledon fibre material.

9. A method according to any one of Claims 4 to 8, wherein said liquid flavour ingredient is an aqueous flavour-containing solution or suspension.

10. A method according to any one of Claims 4 to 8, wherein said liquid flavour ingredient is an oil.

11. A method according to any one of Claims 4 to 8, wherein said liquid flavour ingredient is an alcohol flavouring containing solution or suspension.

12. A method according to Claim 11, wherein said alcohol is an aqueous alcohol.

13. A method according to Claim 11 or Claim 12, wherein said alcohol is propylene glycol.

14. A flavoured food material comprising: a food material; and a powdered flavour composition dispersed in said food material, wherein said powdered flavour composition comprises a soy cotyledon fibre material and a flavour ingredient coated on said soy cotyledon fibre material.

15. A food material according to Claim 14, wherein said food material is a baked bread.

16. A food material according to Claim 14, wherein said food material is a meat.
